# EUROPEAN PATENT APPLICATION

(11) **EP 4 462 918 A1**
(43) Date of publication of application: **13.11.2024**
(21) Application number: 22918673.9
(22) Date of filing: 07.01.2022
(51) Int. Cl.: H04W 72/12, H04W 72/23

(54) **TERMINAL, BASE STATION AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2022/000437
(87) International publication number: WO 2023/132084

(57) **Abstract**

A terminal includes: a reception unit configured to receive control information using a downlink, the control information including a plurality of values indicating scheduling of resources for indicating scheduling of a plurality of downlink data items or uplink data items; and a control unit configured to determine scheduling of downlink data according to semi-persistent scheduling or of uplink data according to CG (Configured Grant), based on the control information.

## Description

### FIELD OF THE INVENTION

The present invention relates to a terminal, a base station and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

NR release 17 discusses using a higher frequency band than a conventional release (e.g., Non-Patent Document 2). For example, applicable numerologies including subcarrier spacings, channel bandwidths, etc., physical layer design, and possible failures in actual wireless communication in the 52.6 GHz to 71 GHz frequency band have been discussed.

In addition, in NR, discussions about the semi-persistent scheduling (SPS) for reducing the downlink overhead are continued from LTE. In addition, in NR, CG (Configured Grant) for the decreased uplink latency is being discussed.

### Citation List

### Non-Patent Document

Non-Patent Document 1: 3GPP TS 38.300 V16.6.0 (2021-06)
Non-Patent Document 2: 3GPP TS 38.306 V16.5.0 (2021-06)

### SUMMARY OF THE INVENTION

### TECHNICAL PROBLEM

There is a problem that specifications for applying the wireless communication system to high frequency bands are not specified. For example, a multi-PDSCH scheduling function of scheduling a plurality of PDSCHs by a single DCI, or a multi-PUSCH scheduling function of scheduling a plurality of PUSCHs by a single DCI is being discussed with respect to the high frequency band such as a band from 52.6 GHz to 71 GHz. However, there is a problem that the discussion on using the multi-PDSCH scheduling function or the multi-PUSCH scheduling function together with SPS or CG has not been performed sufficiently.

The present invention has been made in view of the above points and is intended to apply the wireless communication system to high frequency bands.

### SOLUTION TO PROBLEM

According to the disclosed technique, a terminal is provided. The terminal includes: a reception unit configured to receive control information using a downlink, the control information including a plurality of values indicating scheduling of resources for indicating scheduling of a plurality of downlink data items or uplink data items; and a control unit configured to determine scheduling of downlink data according to semi-persistent scheduling or of uplink data according to CG (Configured Grant), based on the control information.

### ADVANTAGEOUS EFFECTS OF INVENTION

According to the disclosed technique, a technique is provided which enables a radio communication system to be applied to a high frequency band.

### BRIEF DESCRIPTION OF THE DRAWINGS

[Fig. 1] Fig. 1 is a drawing for describing a wireless communication system related to an embodiment of the present invention.
[Fig. 2] Fig. 2 is a drawing illustrating an example of a frequency range related to an embodiment of the present invention.
[Fig. 3] Fig. 3 is a drawing for describing the DCI fields indicating the activation of SPS or CG.
[Fig. 4] Fig. 4 is a drawing for describing the DCI fields indicating the release of SPS or CG.
[Fig. 5] Fig. 5 is a drawing illustrating an example of a functional structure of a base station related to an embodiment of the present invention.
[Fig. 6] Fig. 6 is a drawing illustrating an example of a functional structure of a terminal related to an embodiment of the present invention.
[Fig. 7] Fig. 7 is a drawing illustrating an example of a hardware structure of the base station or the terminal related to an embodiment of the present invention.
[Fig. 8] Fig. 8 is a drawing illustrating an example of a structure of a vehicle related to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques may be, for example, the conventional NR or LTE, but are not limited to the conventional NR or LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

### (System configuration)

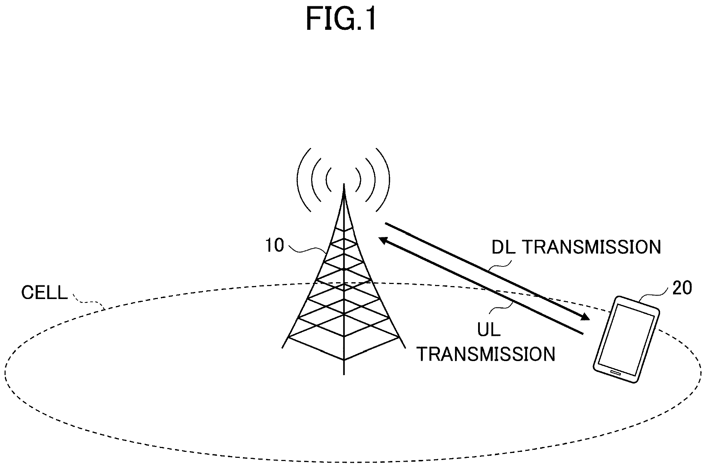

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

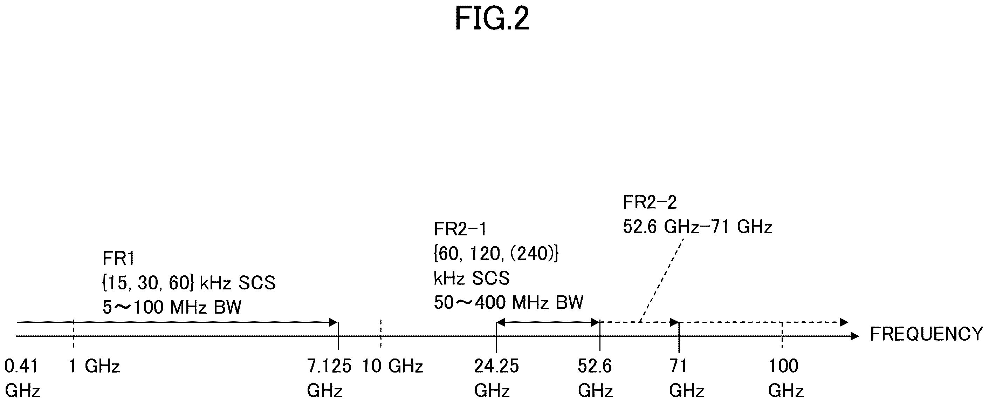

Fig. 2 is a drawing illustrating an example of a frequency range related to an embodiment of the present invention. In the NR specifications of 3GPP Release 15 and Release 16, for example, an operation in a frequency band of 52. 6 GHz or more has been discussed. Note that, as shown in Fig. 2, FR (Frequency range) 1 in which current operation is defined is a frequency band from 410 MHz to 7. 125 GHz, SCS (Sub carrier spacing) is 15, 30, or 60 kHz, and bandwidth is from 5 MHz to 100 MHz. FR2-1 is a frequency band from 24.25 GHz to 52.6 GHz, SCS is 60kHz, 120 kHz or 240 kHz, and the bandwidth is from 50 MHz to 400 MHz. In addition, a newly deployed frequency band FR2-2 is a frequency band from 52.6 GHz to 71 GHz.

Up to 64 SSB beams may be supported in the licensed bands and unlicensed bands in the newly deployed frequency band FR2-2. Also, 120 kHz SCS to be applied to SSB and 120 kHz SCS to be applied to initial access signals and channels, may be supported in the initial BWP (Bandwidth Part).

In addition to the 120 kHz SCS, SSB with 480 kHz SCS may be supported. Initial access supporting CORESET (Control Resource Set)#0/Type0-PDCCH included in the MIB, may be performed by the SSB. However, there may be the following limitations. For example, entry numbers of the synchronization raster may be limited. In addition, only CORESET#0/Type0-PDCCH with 480 kHz SCS may be supported in a case of SSB with 480 kHz SCS. Furthermore, SSB-CORESET multiplexing pattern 1 (SS/PBCH block and CORESET multiplexing pattern 1) may be prioritized.

Uniquely identifying the ANR (Automatic Neighbour Relation) and PCI (Physical Cell Identity) for detecting SSB with 120 kHz SCS, 480 kHz SCS, and 960 kHz SCS may be supported. In addition, CORESET#0/Type0-PDCCH included in MIB of SSB with 120 kHz SCS, 480 kHz SCS, and 960 kHz SCS, may be supported. In addition, one SCS for CORESET#0/Type0-PDCCH may be supported per SCS for SSB. For example, with respect to {SCS of SSB, SCS of CORESET#0/Type0-PDCCH}, {120,120}, {480,480}, and {960,960} may be supported.

Next, the multi-PDSCH scheduling function or the multi-PUSCH scheduling function that is being discussed in NR release 17 will be described.

With respect to the TDRA (Time Domain Resource Assignment) included in a DCI that can schedule a plurality of PDSCHs (or PUSCHs), a function of indicating PDSCHs (or PUSCHs) that are located in consecutive or non-consecutive slots by configuring {SLIV (Start and Length Indicator Value), mapping type or scheduling offset K0 (or K2)} for each PDSCH (or PUSCH) included in each row of the TDRA table is being discussed. SLIV is a value that specifies the resource start position and the length, and is an example of a value indicating the scheduling of a resource.

Next, the SPS activation and release (de-activation) that are being discussed in NR release 17 will be described. The base station 10 can indicate an activation or release of the type 2 CG PUSCH configuration to the terminal 20 by using DCI 0_0, DCI 0_1, or DCI 0_2.

In a case of activating the type 2 CG PUSCH, the base station 10 can indicate the time domain resource allocation of the type 2 CG PUSCH to the terminal 20 by using the TDRA field of the activation DCI.

In addition, in a case of releasing the type 2 CG PUSCH, the base station 10 can indicate the release of one or more of type 2 CG configurations to the terminal 20 by using a single DCI.

Similarly, the base station 10 can indicate an activation or release of the SPS PDSCH configuration to the terminal 20 by using DCI 1_0, DCI 1_1, or DCI 1_2.

In a case of activating the SPS PDSCH, the base station 10 can indicate the time domain resource allocation of the SPS PDSCH to the terminal 20 by using the TDRA field of the activation DCI.

In addition, in a case of releasing the SPS PDSCH, the base station 10 can indicate the release of one or more of SPS configurations to the terminal 20 by using a single DCI.

Next, a method of activating or de-activating SPS in DL and type 2 CG in UL via PDCCH will be described.

The terminal 20 determines that the scheduling activation or scheduling release is valid in a case where the following validation condition is satisfied according to the PDCCH for DL SPS allocation or to the PDCCH for UL type 2 CG.

The validation condition is a case that satisfies all of the following.
(a) The CRC of a corresponding DCI format is scrambled by CS-RNTI.
(b) The NDI (New Data Indicator) field included in the DCI format for the enabled TB (Transport Block) is configured to "0".
(c) The DFI flag field, if present, in the DCI format is configured to "0".
(d) If the validation target is an activation of the scheduling and the "PDSCH-to-HARQ_feedback" timing indicator field in the DCI format is present, the "PDSCH-to-HARQ_feedback" timing indicator field does not provide an inapplicable value from "dl-DataToUL-ACK-r16".

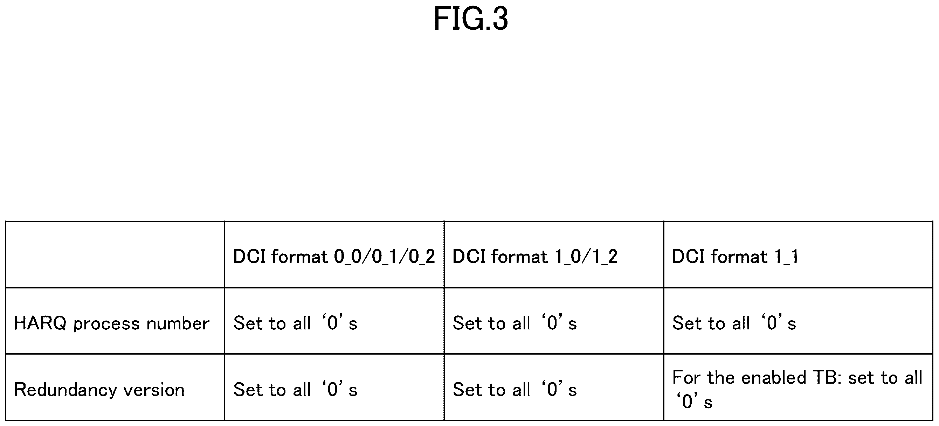

Fig. 3 is a drawing for describing the DCI fields indicating the activation of SPS or CG. The terminal 20 determines that SPS or CG is activated when values that are illustrated in Fig. 3 and are specified for each DCI format are indicated by the base station 10 in addition to the above-described validation condition.

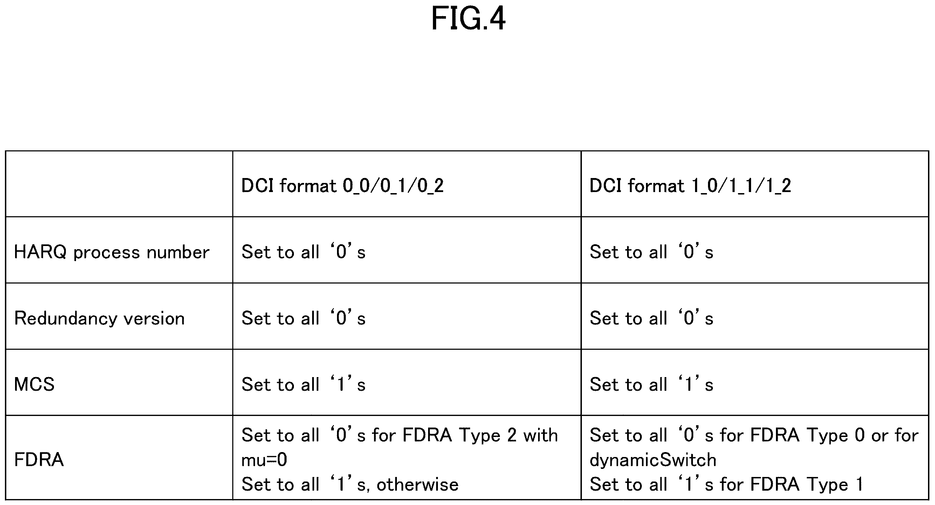

Fig. 4 is a drawing for describing the DCI fields indicating the release of SPS or CG. The terminal 20 determines that SPS or CG is released when values that are illustrated in Fig. 4 and are specified for each DCI format are indicated by the base station 10 in addition to the above-described validation condition.

### (Problem of conventional technique)

Conventionally, in a case where DCI 1_1/0_1 includes a TDRA table including a plurality of SLIVs in at least one row, that is, in a case where the multi-PDSCH scheduling or multi-PUSCH scheduling is enabled, there are problems described below.

The first problem is that whether or not activation of configuration of SPS-PDSCH or CG-PUSCH by DCI 1_1/0_1 is to be allowed is unclear. In addition, in the allowed case, details of reception or transmission of SPS-PDSCH or CG-PUSCH are not specified.

The second problem is that whether or not de-activation (release) of configuration of SPS-PDSCH or CG-PUSCH is by DCI 1_1/0_1 is to be allowed is unclear.

### (Overview of embodiment)

Therefore, in an embodiment of the present invention, in a case where the multi-PDSCH scheduling or the multi-PUSCH scheduling is enabled, a method of activating or releasing the configuration of SPS-PDSCH or CG-PUSCH will be described. Hereinafter, embodiments from an embodiment 1 to an embodiment 3 will be described as specific embodiments of the present invention.

### (Embodiment 1)

In this embodiment, a method of activating SPS-PDSCH or CG-PUSCH will be described. The terminal 20 may perform an operation of one of the following options in a case where DCI 1_1/0_1 includes a TDRA table including a plurality of SLIVs in at least one row, that is, in a case where the multi-PDSCH scheduling or multi-PUSCH scheduling is enabled.

### <Option 1>

The terminal 20 assumes that DCI 1_1/0_1 does not activate the configuration of SPS-PDSCH or CG-PUSCH. For example, in a case where a TDRA table including a plurality of SLIVs in at least one row is configured, even when DCI 1_1/0_1 indicates a combination of a bit sequence indicating an activation of SPS-PDSCH or CG-PUSCH, the terminal 20 may interpret the indication not as an indication of an activation of SPS-PDSCH or CG-PDSCH but as an indication of a normal dynamic PDSCH or PDSCH resource allocation.

### <Option 2>

In a case where the terminal 20 receives DCI 1_1/0_1 from the base station 10 and the configuration of SPS-PDSCH or CG-PUSCH is activated, the terminal 20 assumes that a plurality of SLIVs are not included in a TDRA row indicated by SPS/CG activation DCI 1_1/0_1.

In this case, the terminal 20 determines the resource arrangement of the activated SPS-PDSCH or CG-PUSCH configuration in the time domain, according to a single SLIV indicated by the TDRA row.

It is to be noted that the terminal 20 may assume that a plurality of valid SLIVs are not included in the TDRA row indicated by the activation DCI 1_1/0_1. A valid SLIV may mean, for example, that an SPS-PDSCH resource allocated by the SLIV is a resource that is allocated as a downlink signal in the TDD (Time Division Duplex) configuration.

Therefore, the terminal 20 may determine that, in a case where an SPS-PDSCH resource that is allocated by an SLIV is a resource that is allocated as an uplink signal in the TDD configuration, the SLIV is an invalid SLIV.

The terminal 20 determines the arrangement of the subsequent resources of the activated SPS-PDSCH or CG-PUSCH configuration in the time domain, according to a single valid SLIV indicated by the TDRA row.

### <Option 3>

In a case where the terminal 20 receives DCI 1_1/0_1 from the base station 10, the configuration of SPS-PDSCH or CG-PUSCH is activated, and the TDRA row indicated by the activation DCI 1_1/0_1 includes a plurality of (or a plurality of valid) SLIVs, the terminal 20 performs an operation of one of the following options.

### <Option 3-1>

The terminal 20 may use only a single SLIV for reception or transmission of the activated SPS-PDSCH or CG-PUSCH configuration. For example, the terminal 20 may use an SLIV that configures a first, last, longest, or shortest resource from among SLIVs in the indicated TDRA row.

It is to be noted that the terminal 20 may determine whether or not the SLIV is an SLIV that configures a first or last resource, based on the slot offset (k0 or k2) that is associated with the SLIV. In addition, the longest or shortest resource is determined by the length of the resource in the time direction.

### <Option 3-2>

The terminal 20 may use a plurality of SLIVs for reception or transmission of the activated SPS-PDSCH or CG-PUSCH configuration. In other words, the terminal 20 may perform PDSCH reception or PUSCH transmission by using a plurality of resources that are configured by the plurality of SLIVs.

The terminal 20 may further perform an operation described in one of the following proposals.

### <Proposal 1>

The terminal 20 may use all of the SLIVs for reception or transmission of the activated SPS-PDSCH or CG-PUSCH configuration. In other words, the terminal 20 may perform PDSCH reception or PUSCH transmission by using all of the resources that are configured by the plurality of SLIVs.

### <Proposal 2>

The terminal 20 may use a plurality of SLIVs within a range that does not exceed X for reception or transmission of the activated SPS-PDSCH or CG-PUSCH configuration. X is 2, for example.

### <Proposal 2-A>

X may be a fixed value that is specified by the technical specification or by RRC configuration.

In a case where the number of SLIVs in the indicated TDRA row is equal to or less than X, the terminal 20 may use all of the SLIVs included in the indicated TDRA row for reception or transmission of the activated SPS-PDSCH or CG-PUSCH configuration.

In a case where the number of SLIVs in the indicated TDRA row is greater than X, the terminal 20 may use X SLIVs among which the SLIV in the indicated TDRA row configures the first/last resource or may use X SLIVs among which the SLIV in the indicated TDRA row configures the longest/shortest resource, for reception or transmission of the activated SPS-PDSCH or CG-PUSCH configuration.

### <Proposal 2-B>

X is not required to be a fixed value, and may be a value that is determined by the SPS or CG period and by the range of SLIVs included in the TDRA row.

In a case where all of the SLIVs included in the indicated TDRA row are located within a single SPS or CG period, the terminal 20 may use all of the SLIVs included in the indicated TDRA row for reception or transmission of the activated SPS-PDSCH or CG-PUSCH configuration.

In addition, in a case where all of the SLIVs included in the indicated TDRA row exceed the current SPS or CG period, the terminal 20 may use only SLIVs that are located within the current SPS or CG period for reception or transmission of the activated SPS-PDSCH or CG-PUSCH configuration.

It is to be noted that the terminal 20 may operate by combining the above-described proposal 2-A and proposal 2-B.

### (Embodiment 2)

In this embodiment, a method of releasing (de-activating) SPS-PDSCH or CG-PUSCH will be described. The terminal 20 may perform an operation of one of the following options in a case where DCI 1_1/0_1 includes a TDRA table including a plurality of SLIVs in at least one row, that is, in a case where the multi-PDSCH scheduling or multi-PUSCH scheduling is enabled.

### <Option 1>

The terminal 20 may assume that DCI 1_1/0_1 does release a single SPS-PDSCH or CG-PUSCH configuration. In addition, the terminal 20 may assume that DCI 1_1/0_1 does not release a plurality of SPS-PDSCH or CG-PUSCH configurations. It is to be noted the plurality of SPS-PDSCH or CG-PUSCH configurations may be, for example, configurations in which a plurality of resources that are configured by a plurality of SLIVs as described in the option 3-2 or option 3-3 of the embodiment 1.

For example, in a case where a TDRA table including a plurality of SLIVs in at least one row is configured, even when DCI 1_1/0_1 indicates a combination of a bit sequence indicating a release of SPS-PDSCH or CG-PUSCH, the terminal 20 is not required to interpret the indication as an indication of a release of SPS-PDSCH or CG-PDSCH and may interpret the indication as a normal dynamic PDSCH or PDSCH resource allocation.

### <Option 2>

In a case where the terminal 20 receives DCI 1_1/0_1 from the base station 10 to release a single SPS-PDSCH or CG-PUSCH configuration and/or to release a plurality of SPS-PDSCH or CG-PUSCH configurations, it is assumed that a plurality of SLIVs are not included in the TDRA row that is indicated by the SPS/CG release DCI 1_1/0_1.

It is to be noted that the terminal 20 may assume that a plurality of valid SLIVs are not included in the TDRA row indicated by the release DCI 1_1/0_1.

### <Option 3>

The terminal 20 may assume that DCI 1_1/0_1 releases a single SPS-PDSCH or CG-PUSCH configuration. In addition, the terminal 20 may assume that DCI 1_1/0_1 releases a plurality of SPS-PDSCH or CG-PUSCH configurations. In addition, the terminal 20 assumes that a plurality of (or a plurality of valid) SLIVs are included in the TDRA row indicated by the SPS/CG release DCI 1_1/0_1.

### (Embodiment 3)

In this embodiment, the DCI field for activating or releasing the SPS-PDSCH or CG-PUSCH configuration in a case where the multi-PDSCH scheduling or multi-PUSCH scheduling is enabled will be described.

### <Option 1>

In a case where the SPS-PDSCH or CG-PUSCH configuration can be activated by using DCI 1_1/0_1 (that is, an option 2 and/or option 3 of an embodiment 1), the NDI fields included in a DCI for enabling the scheduling activation may be values described below.

In a case where the DCI is a DCI for activating a single SPS in DL and a type 2 CG in UL, and where the terminal 20 is provided with a single SPS in DL or a type 2 CG in UL configuration, the validation condition may include that, in addition to the HPN and RV fields, the NDI bits of DCI 1_1/0_1 are all configured to "0".

In addition, in a case where a DCI for activating a single or a plurality of SPSs in DL or type 2 CGs in UL is to be validated, and where the terminal 20 is provided with a plurality of SPS in DL or type 2 CG in UL configurations, the validation condition may include that, in addition to the RV field, the NDI bits of DCI 1_1/0_1 are all configured to "0".

### <Option 2>

In a case where the SPS-PDSCH or CG-PUSCH configuration can be released by using DCI 1_1/0_1 (that is, an option 2 and/or option 3 of an embodiment 2), the NDI fields included in a DCI for enabling the scheduling release may be values described below.

In a case where the DCI is a DCI for releasing a single SPS in DL and a type 2 CG in UL, and where the terminal 20 is provided with a single SPS in DL or a type 2 CG in UL configuration, the validation condition may include that, in addition to the HPN, RV, MCS, and FDRA fields, the NDI bits of DCI 1_1/0_1 are all configured to "0".

In addition, in a case where a DCI for releasing a single or a plurality of SPSs in DL or type 2 CGs in UL is to be validated, and where the terminal 20 is provided with a plurality of SPS in DL or type 2 CG in UL configurations, the validation condition may include that, in addition to the RV, MCS, and FDRA fields, the NDI bits of DCI 1_1/0_1 are all configured to "0".

In an embodiment of the present invention, the DCI 1_1/0_1 may be replaced with another DCI format that can include at least one or more TDRA table rows including a plurality of SLIVs.

Each option described in each of the above-described embodiments may be limited to a specific frequency range. For example, each option may be limited to FR2-2 (52.6-71 GHz band).

Each option described in each of the above-described embodiments may be limited to a specific subcarrier spacing. For example, each option may be limited to 120 and/or 480 and/or 960 kHz SCS.

With respect to each option described in each of the above-described embodiments, one of the following may be applied.
- Configured by an upper layer parameter.
- Reported by the terminal 20 as a terminal capability.
- Described in the technical specification.
- Determined by a configuration by the upper layer parameter and the reported terminal capability.

The terminal 20 may transmit information indicating at least one of the following terminal capabilities to the base station 10.
- Terminal capability indicating whether or not to support the multi-PDSCH/PUSCH scheduling based on a single DCI.
- Terminal capability indicating whether or not to support activation of SPS-PDSCH or CG-PUSCH configuration by a DCI format that is configured with a TDRA table including a plurality of SLIVs in at least one row.
- Terminal capability indicating whether or not to support reception or transmission of SPS-PDSCH or CG-PUSCH configuration in which a plurality of SLIVs are activated.
- Terminal capability indicating whether or not to support a release (de-activation) of SPS-PDSCH or CG-PUSCH configuration by a DCI format that is configured with a TDRA table including a plurality of SLIVs in at least one row.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

### <Base station 10>

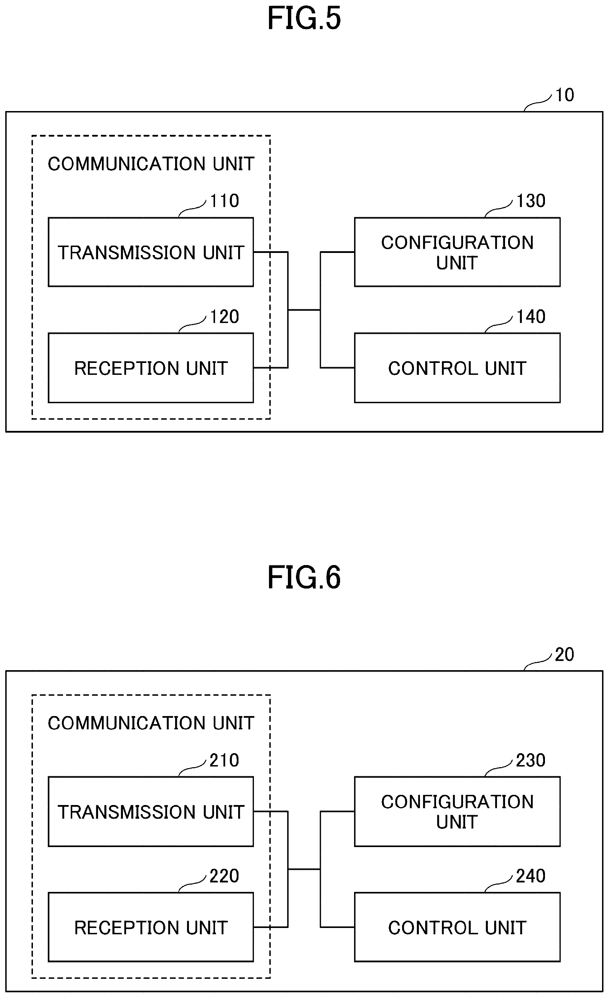

Fig. 5 is a drawing illustrating an example of a functional configuration of the base station. As shown in Fig. 5, the base station 10 includes a transmission unit 110, a reception unit 120, a configuration unit 130, and a control unit 140. The functional configuration illustrated in Fig. 5 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 6 is a drawing illustrating an example of a functional configuration of the terminal. As shown in Fig. 6, the terminal 20 includes a transmission unit 210, a reception unit 220, a configuration unit 230, and a control unit 240. The functional configuration illustrated in Fig. 6 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following paragraphs. In addition, a communication method below may be performed.

### <Configuration related to an embodiment of the present invention>

### (First item)

A terminal including:
a reception unit configured to receive control information using a downlink, the control information including a plurality of values indicating scheduling of resources for indicating scheduling of a plurality of downlink data items or uplink data items; and
a control unit configured to determine scheduling of downlink data according to semi-persistent scheduling or of uplink data according to CG (Configured Grant), based on the control information.

### (Second item)

The terminal as described in the first item, wherein
the control unit determines a value to be used for scheduling of the downlink data according to the semi-persistent scheduling or the uplink data according to the CG from among the plurality of values indicating scheduling of resources for indicating scheduling of a plurality of downlink data items or uplink data items.

### (Third item)

The terminal as described in the first item or the second item, wherein
the reception unit receives information indicating an activation or release of a configuration of the semi-persistent scheduling or the CG, and
the control unit determines an activation or release of a configuration of the semi-persistent scheduling or the CG, based on the information indicating an activation or release of a configuration of the semi-persistent scheduling or the CG.

### (Fourth item)

A base station including:
a transmission unit configured to transmit control information to a terminal, the control information including a plurality of values indicating scheduling of resources for indicating scheduling of a plurality of downlink data items or uplink data items; and
a control unit configured to assume that the terminal determines scheduling of downlink data according to semi-persistent scheduling or of uplink data according to CG, based on the control information.

### (Fifth item)

A communication method performed by a terminal, the communication method comprising:
receiving control information using a downlink, the control information including a plurality of values indicating scheduling of resources for indicating scheduling of a plurality of downlink data items or uplink data items; and
determining scheduling of downlink data according to semi-persistent scheduling or of uplink data according to CG, based on the control information.

According to any one of the above configurations, a technique is provided which enables a radio communication system to be applied to a high frequency band. According to the second item, a value can be selected that is used for scheduling of downlink data according to semi-persistent scheduling or uplink data according to CG. According to the third item, an activation or release of semi-persistent scheduling or CG configuration can be determined.

### (Hardware structure)

In the above block diagrams used for describing an embodiment of the present invention (Fig. 5 and Fig. 6), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

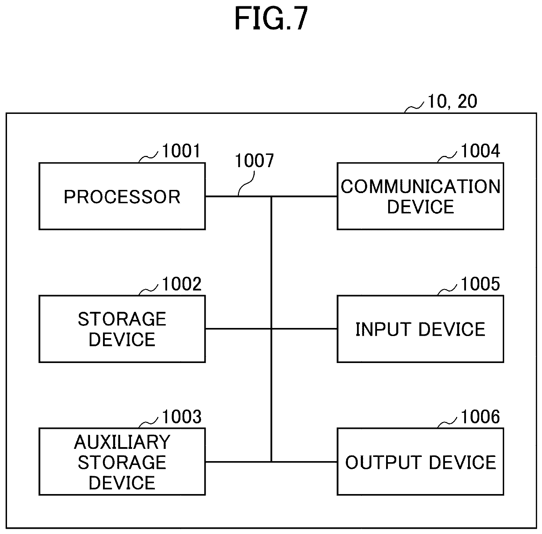

For example, the base station 10, the terminal 20, etc., according to an embodiment of the present disclosure may function as a computer for processing the radio communication method of the present disclosure. Fig. 7 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 5 may be realized by control programs that are stored in the storage device 1002 and are executed by the processor 1001. Further, for example, the control unit 240 of the terminal 20 illustrated in Fig. 6 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

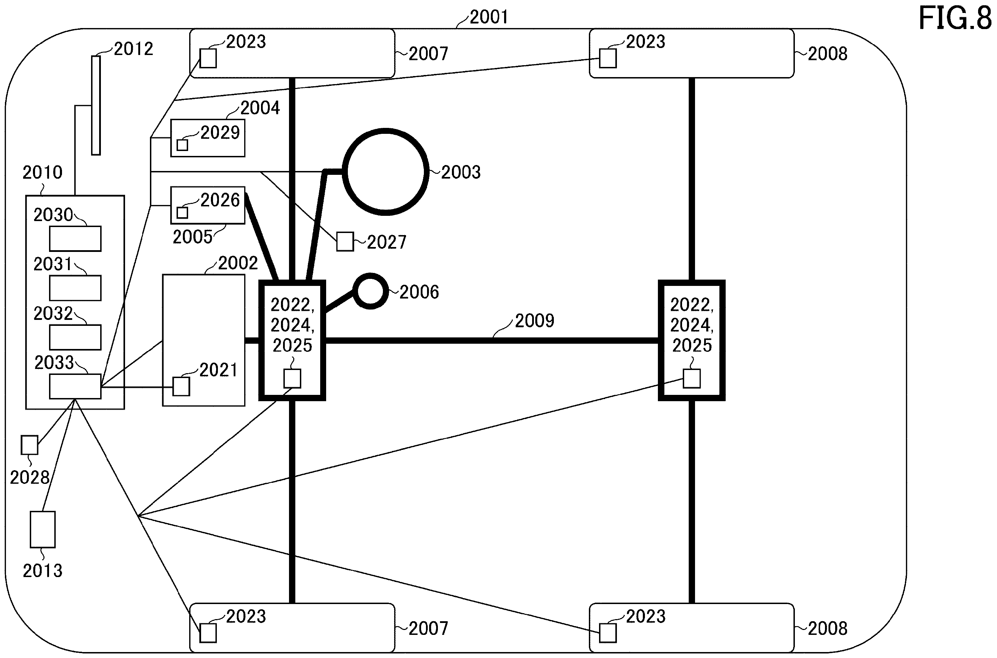

Fig. 8 shows an example of a configuration of a vehicle 2001. As shown in Fig. 8, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations that are supposed to be performed by the base station 10 in the present specification may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a subslot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive control information using a downlink, the control information including a plurality of values indicating scheduling of resources for indicating scheduling of a plurality of downlink data items or uplink data items; and
a control unit configured to determine scheduling of downlink data according to semi-persistent scheduling or of uplink data according to CG (Configured Grant), based on the control information.

2. The terminal as claimed in claim 1, wherein
the control unit determines a value to be used for scheduling of the downlink data according to the semi-persistent scheduling or the uplink data according to the CG from among the plurality of values indicating scheduling of resources for indicating scheduling of a plurality of downlink data items or uplink data items.

3. The terminal as claimed in claim 1 or 2, wherein
the reception unit receives information indicating an activation or release of a configuration of the semi-persistent scheduling or the CG, and
the control unit determines an activation or release of a configuration of the semi-persistent scheduling or the CG, based on the information indicating an activation or release of a configuration of the semi-persistent scheduling or the CG.

4. A base station comprising:
a transmission unit configured to transmit control information to a terminal, the control information including a plurality of values indicating scheduling of resources for indicating scheduling of a plurality of downlink data items or uplink data items; and
a control unit configured to assume that the terminal determines scheduling of downlink data according to semi-persistent scheduling or of uplink data according to CG, based on the control information.

5. A communication method performed by a terminal, the communication method comprising:
receiving control information using a downlink, the control information including a plurality of values indicating scheduling of resources for indicating scheduling of a plurality of downlink data items or uplink data items; and
determining scheduling of downlink data according to semi-persistent scheduling or of uplink data according to CG, based on the control information.
